# EUROPÄISCHE PATENTSCHRIFT

(11) **EP 3 658 407 B1**
(45) Veröffentlichungstag und Bekanntmachung des Hinweises auf die Patenterteilung: **21.07.2021**
(21) Anmeldenummer: 18745936.7
(22) Anmeldetag: 25.07.2018
(51) Int. Cl.: B60N 2/02, B60N 2/06, B60N 2/427

(54) **FAHRZEUGSITZKONSOLE**
VEHICLE SEAT CONSOLE
BASE DE SIÈGE DE VÉHICULE

(30) Priorität: 26.07.2017 DE 102017212792
(43) Veröffentlichungstag der Anmeldung: 03.06.2020
(73) Patentinhaber: Bayerische Motoren Werke Aktiengesellschaft, 80809 München (DE)
(72) Erfinder: HUF, Andreas, 86356 Neusäß (DE); KÖHLER, Fabian, 80336 München (DE); KLEINDL, Sylvia, 81476 Muenchen (DE); MARTIN, Robert, 80807 München (DE); HUFNAGL, Klaus, 80999 München (DE); PAINER, Robert, 80939 München (DE)
(86) Internationale Anmeldenummer: PCT/EP2018/070221
(87) Internationale Veröffentlichungsnummer: WO 2019/020711

(56) Entgegenhaltungen:
- DE-A1-102015 116 480
- US-A- 4 355 778

## Beschreibung

### TECHNISCHES GEBIET

Die Erfindung betrifft eine Fahrzeugsitzkonsole nach dem Oberbegriff des Patentanspruchs 1. Die Erfindung betrifft weiterhin einen Fahrzeugsitz mit einer solchen Fahrzeugsitzkonsole sowie ein Kraftfahrzeug mit zumindest einem derartigen Fahrzeugsitz.

### HINTERGRUND DER ERFINDUNG

Gurtsysteme und Airbags sind seit Jahrzehnten anerkannte Insassenschutzsysteme von Kraftfahrzeugen. Sie reduzieren die Belastungen auf die Insassen eines Fahrzeugs im Fall einer Fahrzeugkollision zumeist nur in definierten, aufrechten Sitzpositionen. Liegepositionen werden jedoch besonders bei vollautomatisiertem Fahren immer wichtiger, so dass auch ein adäquater Insassenschutz in solchen Liegepositionen gewährleistet sein muss. Mit den bekannten Insassenschutzsystemen jedoch können im Fall einer Fahrzeugkollision die Belastungen auf den Insassen bei liegender oder halbliegender Position nicht ausreichend reduziert werden. Es bedarf daher einer Weiterentwicklung der Insassenschutzsysteme, durch die im Fall einer Fahrzeugkollision die Beschleunigung des Körpers eines Fahrzeuginsassen auch bei liegender bzw. halbliegender Position auf ein festgelegtes Maß begrenzt wird.

Aus der US 4 355 778 A ist eine Längsverstelleinrichtung für einen Fahrzeugsitz bekannt, die eine Zahnstange und ein mit der Zahnstange kämmendes Zahnrad aufweist.

Aus der DE 10 2015 116 480 A1 ist eine Verstelleinrichtung zur Veränderung der Neigung eines Sitzpolsters bekannt. Die Verstelleinrichtung weist eine Zahnstange aus Stahl oder aus Aluminium auf sowie ein Zahnrad, das aus einem Kunststoff, wie etwa Nylon, verschiedenen Verbundkunststoffen oder dergleichen bestehen kann, so dass sich in der Verstelleinrichtung eine reduzierte Reibung zwischen Zahnrad und Zahnstange ergibt, wodurch die Notwendigkeit der Verwendung mechanischer Schmiermittel entfällt oder zumindest reduziert werden kann.

### DARSTELLUNG DER ERFINDUNG

Aufgabe der vorliegenden Erfindung ist es, eine gattungsgemäße Fahrzeugsitzkonsole anzugeben, die ausgebildet ist, um im Fall einer Fahrzeugkollision die Belastungen auf den Körper einer auf dem Fahrzeugsitz befindlichen Person ausreichend zu begrenzen, auch wenn diese Person sich in einer liegenden oder halbliegenden Position befindet.

Diese Aufgabe wird gelöst mit den Merkmalen des Patentanspruchs 1.

Eine Fahrzeugsitzkonsole mit zumindest einem fahrzeugseitigen Führungselement und zumindest einem parallel zum fahrzeugseitigen Führungselement angeordneten sitzseitigen Führungselement sowie zumindest einer von einer Antriebseinrichtung beaufschlagten Längsverstelleinrichtung, die ausgestaltet ist, um eine Relativverstellung zwischen dem fahrzeugseitigen Führungselement und dem sitzseitigen Führungselement zu bewirken, wobei die Längsverstelleinrichtung eine Zahnstange sowie ein mit dieser in kämmendem Eingriff stehendes Zahnrad aufweist, zeichnet sich erfindungsgemäß dadurch aus, dass die Zähne des Zahnrads und/oder die Zähne zumindest eines Abschnitts der Zahnstange aus Materialien mit unterschiedlicher Scherfestigkeit bestehen, so dass zwischen Zahnrad und Zahnstange ein Schwachstellenbereich ausgebildet ist, in dem im Überlastfall ein gewolltes Materialversagen auftritt.

### VORTEILE

Die Längsverstellung des Fahrzeugsitzes erfolgt auf an sich bekannte Weise mit einem am Fahrzeugsitz oder an der Oberschiene drehbar gelagerten und elektrisch angetriebenen oder antreibbaren Zahnrad, das mit den Zähnen der Zahnstange kämmt und auf der Zahnstange abwälzt, wodurch der Fahrzeugsitz in Fahrzeuglängsrichtung verstellt wird. Diese Vorrichtung lagert den Fahrzeugsitz somit beweglich relativ zur Fahrzeugstruktur. Im Fall einer Kollision ist der mit dem Insassen beladene Fahrzeugsitz aufgrund seiner Massenträgheit bestrebt, sich entgegen der auf die Fahrzeugstruktur einwirkenden Kollisionskraft weiter fortzubewegen. Das Zahnrad ist allerdings aufgrund der ihm systembedingt eigenen Selbsthemmung nicht in der Lage, eine Relativbewegung zwischen der fahrzeugstrukturfesten Unterschiene und der sitzfesten Oberschiene zuzulassen.

Die erfindungsgemäße Materialwahl für die Zähne des Zahnrads und zumindest einen Teil der Zähne der Zahnstange ermöglicht, dass die Zähne aus dem Material mit der geringeren Scherfestigkeit versagen und eine Relativbewegung zwischen der Oberschiene und der Unterschiene, also zwischen dem Fahrzeugsitz und der Fahrzeugstruktur stattfinden kann. Die versagenden Zähne geben also einen Verfahrweg auf einem festgelegten Kraftniveau frei. Dies wird somit über die Kombination von Zahnrad und Zahnstange aus Materialien mit unterschiedlicher Scherfestigkeit erzielt.

Der Kern der Erfindung besteht also darin, durch das Vorsehen der Zähne aus dem Material mit der geringeren Scherfestigkeit in der Paarung zwischen Zahnrad und Zahnsange gezielt einen Schwachstellenbereich auszubilden, in dem - ähnlich wie bei einer Sollbruchstelle - im Überlastfall ein gewolltes Materialversagen auftritt, also einen Materialversagensbereich. Die im Fall einer Fahrzeugkollision auf die Fahrzeugstruktur einwirkende Kollisionsbeschleunigung bewirkt im Fahrzeugsitz eine entgegengesetzt gerichtete Beschleunigung, die wiederum eine Kraft erzeugt, die auf die Zahnflanken in der Paarung zwischen Zahnrad und Zahnsange wirkt und die von der Größe dieser Beschleunigung und von der Masse des Fahrzeugsitzes mit der darauf sitzenden Person abhängt. Überschreitet diese Kraft einen durch die Scherfestigkeit des Materials vorgegebenen Schwellenwert für die Kraftabstützfähigkeit der Paarung zwischen Zahnrad und Zahnsange, so versagt das Material im Materialversagensbereich und der Fahrzeugsitz kann sich relativ zur Fahrzeugstruktur bewegen. Dabei wird kinetische Energie in Verformung (der Zähne) umgesetzt und somit abgebaut; die Weiterbewegung des Fahrzeugsitzes erfolgt also gebremst. Auf diese Weise werden für die auf dem Fahrzeugsitz sitzende Person kollisionsbedingte Beschleunigungsspitzen abgebaut.

Die Zähne des Zahnrads sind dazu beispielsweise aus härterem Material mit größerer Scherfestigkeit ausgebildet als die Zähne zumindest eines Bereichs der Zahnstange, so dass im Fall einer Fahrzeugkollision die Zähne des Zahnrads die Zähne in diesem Bereich der Zahnstange abscheren und dadurch eine definierte Kraftbegrenzung der auf den Fahrzeugsitz einwirkenden Kollisionskraft schaffen. Ausgelöst wird die Kraftbegrenzung durch die Kräfte, die durch Insassen, Gurtsystem und Sitz im Kollisionsfall wirken. Die erfindungsgemäße Fahrzeugsitzkonsole liefert bessere Insassenschutzwerte im Kollisionsfall als ohne Kraftbegrenzung, insbesondere bei Liegepositionen.

Weitere bevorzugte und vorteilhafte Ausgestaltungsmerkmale der erfindungsgemäßen Fahrzeugsitzkonsole sind Gegenstand der Unteransprüche 2 bis 7.

Vorzugsweise ist die jeweilige Zahnstange fahrzeugfest und das zugeordnete Zahnrad ist am sitzseitigen Führungselement oder am Fahrzeugsitz drehbar gelagert.

In einer vorteilhaften Ausführungsform weisen die Materialien mit unterschiedlicher Scherfestigkeit ein Metall einerseits und ein Kunststoffmaterial oder ein weicheres Metall, wie beispielsweise Aluminium oder Kupfer, andererseits auf.

Vorzugsweise weist das Zahnrad dabei Metallzähne auf und zumindest ein Bereich der Zahnstange weist Zähne aus einem Kunststoffmaterial oder einem weicheren Metall, wie beispielsweise Aluminium oder Kupfer, auf, dessen Scherfestigkeit geringer ist als die der Metallzähne des Zahnrads.

Von Vorteil ist auch, wenn die Verzahnung zwischen dem Zahnrad und der Zahnstange eine Doppelschrägverzahnung ist.

Dabei ist die Doppelschrägverzahnung des Zahnrads vorzugsweise eine offene Doppelschrägverzahnung.

In einer Ausführungsform, die mit anderen Ausführungsformen kombinierbar ist, ist die Doppelschrägverzahnung der Zahnstange eine geschlossene Doppelschrägverzahnung.

Die Erfindung betrifft auch einen Fahrzeugsitz mit einer erfindungsgemäßen Fahrzeugsitzkonsole.

Zudem ist die Erfindung gerichtet auf ein Kraftfahrzeug mit zumindest einem erfindungsgemäßen Fahrzeugsitz.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: ein Grundrissschema einer erfindungsgemäßen Sitzkonsole;
- Fig. 2: einen Ausschnitt einer Seitenansicht der Sitzkonsole in Richtung des Pfeils II in Fig. 1;
- Fig. 3: eine schematische Darstellung einer offenen Doppelschrägverzahnung der Zahnstange und
- Fig. 4: eine schematische Darstellung einer geschlossenen Doppelschrägverzahnung der Zahnstange.

### DARSTELLUNG VON BEVORZUGTEN AUSFÜHRUNGSBEISPIELEN

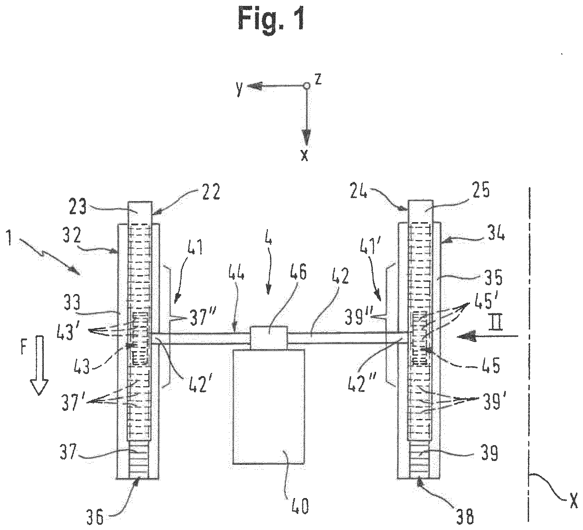

Fig. 1 zeigt im Grundriss schematisch eine Fahrzeugsitzkonsole gemäß der vorliegenden Erfindung. Die Fahrzeugsitzkonsole 1 verbindet einen Fahrzeugsitz 2 mit dem Chassis 30 eines Fahrzeugs 3. Dazu weist die Fahrzeugsitzkonsole 1 in Fahrzeuglängsrichtung x ausgerichtete Führungselemente 32, 34, nämlich jeweils eine mit dem Fahrzeugboden 31 fest verbundene rechte untere Führungsschiene 33 und eine ebenfalls mit dem Fahrzeugboden 31 fest verbundene linke untere Führungsschiene 35, auf. Diese unteren Führungsschienen 33, 35 stehen parallel zur Fahrzeuglängsachse X. Mit diesen unteren Führungsschienen 33, 35 sind am Fahrzeugsitz 2 angebrachte obere Führungsschienen 23, 25 in herkömmlicher Weise in Gleiteingriff. Diese oberen Führungsschienen 23, 25 bilden sitzseitige Führungselemente 22, 24. Zwischen den unteren Führungsschienen 33, 35 und den oberen Führungsschienen 23, 25 ist eine jeweils in den Figuren nicht näher gezeigte und beschriebene Gleitfläche ausgebildet, die vorteilhafterweise mit einem Gleitmittel versehen oder beschichtet ist. An Stelle einer Gleitfläche kann auch ein Wälzlager, zum Beispiel ein Kugellager, vorgesehen sein.

Innerhalb oder neben der rechten unteren Führungsschiene 33 und der linken unteren Führungsschiene 35 ist jeweils eine Zahnstange 36, 38 fahrzeugfest angebracht, die sich im Wesentlichen über die Länge der jeweiligen unteren Führungsschienen 33, 35 erstreckt. Die Verzahnung 37, 39 der jeweiligen Zahnstange 36, 38 ist dabei im gezeigten Beispiel nach oben gerichtet, so dass die Zähne zum Fahrzeugsitz 2 hin weisen.

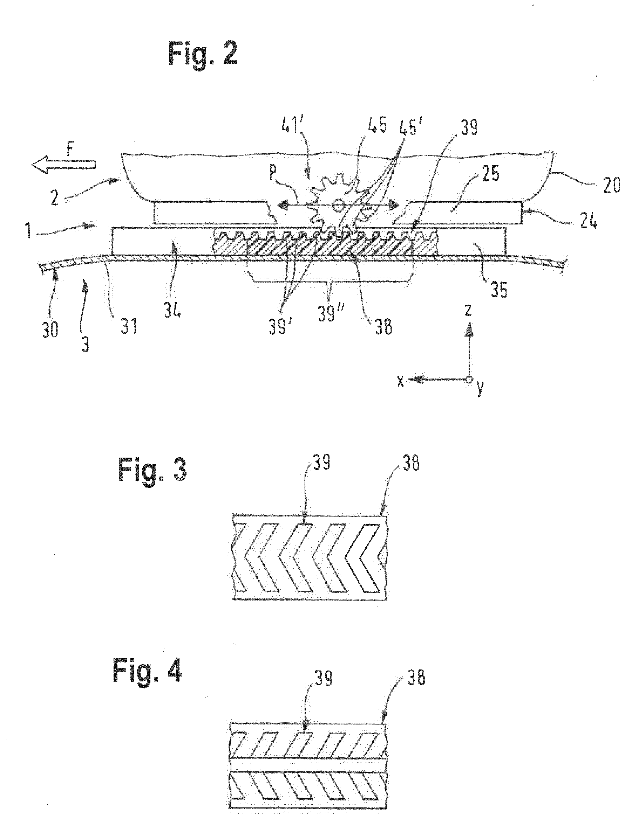

Am Fahrzeugsitz 2 ist an der Unterseite des Sitzbodens 20 ein Sitzverstellmechanismus 4 angeordnet. Dieser Sitzverstellmechanismus 4 weist eine Antriebseinrichtung 40, beispielsweise einen Elektromotor, auf, der mit einer sich in Fahrzeugquerrichtung y erstreckenden Antriebswelle 42 gekoppelt ist und diese mit einer Antriebskraft beaufschlagt. Am jeweiligen linken bzw. rechten Ende der Antriebswelle 42 ist jeweils ein Zahnrad (Ritzel) 43, 45 drehfest mit der Antriebswelle 42 verbunden, wobei das jeweilige Zahnrad 43, 45 so angeordnet ist, dass es oberhalb der jeweiligen Zahnstange 36, 38 des jeweils zugeordneten fahrzeugseitigen Führungselements 32, 34 liegt und mit der jeweiligen Verzahnung 37, 39 kämmt. Eine von der Antriebseinrichtung 40 beaufschlagte Drehung der Antriebswelle 42 bewirkt eine Drehung des am jeweiligen Ende der Antriebswelle 42 angebrachten Zahnrads 43, 45, welches dann aufgrund der Kämmung mit der jeweils zugeordneten Zahnstange 36, 38 in Fahrtrichtung F nach vorne oder in entgegengesetzter Richtung nach hinten wandert und den Fahrzeugsitz 2 in diese Richtung mitnimmt, wie es durch den Doppelpfeil P in Fig. 2 symbolisiert ist. Die unteren Führungsschienen 33, 35, die oberen Führungsschienen 23, 25, die Zahnstangen 36, 38 und die Zahnräder 43, 45 bilden auf diese Weise jeweils eine Längsverstelleinrichtung 41, 41' für den Fahrzeugsitz 2. Die jeweilige Längsverstelleinrichtung 41, 41' bildet dabei eine nicht selbsthemmende translatorische Bewegungseinheit.

Die Antriebswelle 42 bildet eine Übertragungseinrichtung 44 für das von der Antriebseinrichtung 40 aufgebrachte Drehmoment zur jeweiligen Längsverstelleinrichtung 41, 41' hin.

Damit sich der Fahrzeugsitz 2 im Normalfall durch Aufbringen von gemäßigten äußeren Kräften nicht ungewollt verschieben kann, ist zwischen der Antriebseinrichtung 40 und der Antriebswelle 42 eine selbsthemmende Bewegungseinheit 46 vorgesehen, die beispielsweise einen Schneckenwellenantrieb aufweist. Alternativ oder zusätzlich kann auch eine Verriegelung vorgesehen sein.

Die Zähne 43', 45' des jeweiligen Zahnrads 43, 45 und die Zähne 37', 39' zumindest eines Sicherheitsabschnitts 37", 39" der Verzahnung 37, 39 der jeweiligen Zahnstange 36, 38 bestehen aus Materialien mit unterschiedlicher Scherfestigkeit. Beispielsweise weist das jeweilige Zahnrad 43, 45 Metallzähne auf und der Sicherheitsabschnitt 37", 39" der Verzahnung 37, 39 der jeweiligen Zahnstange 36, 38 weist Zähne 37', 39' aus einem Kunststoffmaterial oder anderem weicheren Material, beispielsweise Aluminium oder Kupfer auf, dessen Scherfestigkeit geringer ist als die der Metallzähne des jeweiligen Zahnrads 43, 45.

Im Falle einer stärkeren Kollision des Fahrzeugs 3 mit einem Hindernis oder einem anderen Fahrzeug, bei welcher die Kollisionskraft eine wesentliche Komponente in Fahrzeuglängsrichtung x aufweist, wird das Fahrzeug 3 durch die impulsartig auftretende Kollisionskraft positiv (Heckaufprall) oder negativ (Frontalaufprall) beschleunigt. Bei dieser Beschleunigung ist der Fahrzeugsitz 2 mit der darauf sitzenden Person aufgrund der Trägheitsmasse dieser Person und des Fahrzeugsitzes 2 bestrebt, zunächst die ursprüngliche Geschwindigkeit beizubehalten, während das Fahrzeug 3 der von der kollisionsbedingt ausgeübten Beschleunigung ausgelösten Geschwindigkeitsänderung unterliegt. Dies führt dazu, dass die mit dem Fahrzeugchassis 30 fest verbundenen fahrzeugseitigen Führungselemente 32, 34 und die mit dem Fahrzeugsitz 2 fest verbundenen sitzseitigen Führungselemente 22, 24 aufgrund der kollisionsbedingten Relativkräfte bestrebt sind, eine Relativbewegung auszuführen, aber durch die selbsthemmenden Zahnräder 43, 45 oder eventuell zusätzlich verriegelt, die mit der zugehörigen Zahnstange 36, 38 im Eingriff stehen, daran gehindert sind. Diese Relativkräfte werden über die Zahnflanken der miteinander in Eingriff stehenden Zähne 43', 45', 37', 39' der Zahnräder 43, 45 und des Sicherheitsabschnitts 37", 39" der Verzahnung 37, 39 der zugeordneten Zahnstange 36, 38 abgestützt. Erreichen die kollisionsbedingten Relativkräfte eine Stärke, die nicht mehr von den schwächer dimensionierten Zähnen 37', 39' des Sicherheitsabschnitts 37", 39" der Verzahnung 37, 39 der jeweiligen Zahnstange 36, 38 abgestützt werden können, so scheren diese schwächeren Zähne 37', 39' ab und der Fahrzeugsitz 2 kann sich - durch den Abschervorgang gebremst - relativ zum Fahrzeugchassis 30 weiterbewegen. Die durch den Kollisionsimpuls hervorgerufene Kollisionsbeschleunigung wird folglich durch das Abscheren der Zähne 37', 39' gemildert, so dass die auf den Fahrzeugsitz 2 und die darauf sitzende Person einwirkende Beschleunigung geringer ist als die Kollisionsbeschleunigung. Ein Teil der kinetischen Energie des Fahrzeugsitzes 2 mit der darauf sitzenden Person wird somit in freie Oberflächen (Bruchflächen der Zähne 37', 39') umgewandelt.

Die Verzahnung 37, 39 der jeweiligen Zahnstange 36, 38 kann nicht nur, wie in Fig. 1 gezeigt ist, als Geradverzahnung, sondern alternativ als geschlossene Doppelschrägverzahnung, wie in Fig. 3 gezeigt, oder als offene Doppelschrägverzahnung, wie in Fig. 4 gezeigt, ausgebildet sein. Dementsprechend ist auch das jeweils zugeordnete Zahnrad 43, 45 mit der gleichen Verzahnung versehen. Es ist dabei auch möglich, eine offene und eine geschlossene Doppelschrägverzahnung zwischen Zahnrad und Zahnstange miteinander zu kombinieren.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Fahrzeugsitzkonsole
- 2: Fahrzeugsitz
- 3: Fahrzeug
- 22: sitzseitiges Führungselement
- 23: obere Führungsschiene
- 24: sitzseitiges Führungselement
- 25: obere Führungsschien
- 30: Chassis
- 31: Fahrzeugboden
- 32: fahrzeugseitiges Führungselement
- 33: untere Führungsschiene
- 34: fahrzeugseitiges Führungselement
- 35: untere Führungsschiene
- 36: Zahnstange
- 37: Verzahnung
- 37': Zähne
- 37": Sicherheitsabschnitt
- 38: Zahnstange
- 39: Verzahnung
- 39': Zähne
- 39": Sicherheitsabschnitt
- 40: Antriebseinrichtung
- 41: Längsverstelleinrichtung
- 41': Längsverstelleinrichtung
- 42: Antriebswelle
- 42': äußerer Abschnitt
- 42": äußerer Abschnitt
- 43: Zahnrad (Ritzel)
- 43': Zähne
- 44: Übertragungseinrichtung
- 45: Zahnrad (Ritzel)
- 45': Zähne
- 46: selbsthemmende Bewegungseinheit

- P: Doppelpfeil

## Patentansprüche

1. Fahrzeugsitzkonsole mit zumindest einem fahrzeugseitigen Führungselement (32, 34) und zumindest einem parallel zum fahrzeugseitigen Führungselement (32, 34) angeordneten sitzseitigen Führungselement (22, 24) sowie zumindest einer von einer Antriebseinrichtung (40) beaufschlagten Längsverstelleinrichtung (41, 41'), die ausgestaltet ist, um eine Relativverstellung zwischen dem fahrzeugseitigen Führungselement (32, 34) und dem sitzseitigen Führungselement (22, 24) zu bewirken, wobei die Längsverstelleinrichtung (41, 41') eine Zahnstange (36, 38) sowie ein mit dieser in kämmendem Eingriff stehendes Zahnrad (43, 45) aufweist, **dadurch gekennzeichnet,**
**dass** die Zähne (43', 45') des Zahnrads (43, 45) und/oder die Zähne (37', 39') zumindest eines Abschnitts der Zahnstange (36, 38) aus Materialien mit unterschiedlicher Scherfestigkeit bestehen, so dass zwischen Zahnrad (43, 45) und Zahnstange (36, 38) ein Schwachstellenbereich ausgebildet ist, in dem im Überlastfall ein gewolltes Materialversagen auftritt.

2. Fahrzeugsitzkonsole nach Anspruch 1, **dadurch gekennzeichnet, dass** die Zahnstange (36, 38) fahrzeugfest ist und dass das Zahnrad (43, 45) am sitzseitigen Führungselement (22, 24) oder am Fahrzeugsitz (2) drehbar gelagert ist.

3. Fahrzeugsitzkonsole nach Anspruch 1 oder 2,
**dadurch gekennzeichnet,**
**dass** die Materialien mit unterschiedlicher Scherfestigkeit ein Metall einerseits und ein Kunststoffmaterial oder ein weicheres Material, zum Beispiel ein weicheres Metall, wie Aluminium oder Kupfer, andererseits aufweisen.

4. Fahrzeugsitzkonsole nach Anspruch 3,
**dadurch gekennzeichnet,**
**dass** das Zahnrad (43, 45) Metallzähne (43', 45') aufweist und dass zumindest ein Bereich der Zahnstange (36, 38) Zähne (37', 39') aus einem Kunststoffmaterial oder einem weicheren Material, zum Beispiel einem weicheren Metall, wie beispielsweise Aluminium oder Kupfer, aufweist, dessen Scherfestigkeit geringer ist als die der Metallzähne (43', 45') des Zahnrads (43, 45).

5. Fahrzeugsitzkonsole nach einem der vorhergehenden Ansprüche,
**dadurch gekennzeichnet,**
**dass** die Verzahnung zwischen dem Zahnrad (43, 45) und der Zahnstange (36, 38) eine Doppelschrägverzahnung ist.

6. Fahrzeugsitzkonsole nach Anspruch 5,
**dadurch gekennzeichnet,**
**dass** die Doppelschrägverzahnung des Zahnrads (43, 45) eine offene Doppelschrägverzahnung ist.

7. Fahrzeugsitzkonsole nach einem der vorhergehenden Ansprüche,
**dadurch gekennzeichnet,**
**dass** die Doppelschrägverzahnung der Zahnstange (36, 38) eine geschlossene Doppelschrägverzahnung ist.

8. Fahrzeugsitz mit einer Fahrzeugsitzkonsole (1) nach einem der vorhergehenden Ansprüche.

9. Kraftfahrzeug mit zumindest einem Fahrzeugsitz (2) nach Anspruch 8.

## Claims

1. Vehicle seat console having at least one vehicle-mounted guide element (32, 34) and at least one seat-mounted guide element (22, 24), which is arranged parallel to the vehicle-mounted guide element (32, 34), and at least one longitudinal-adjustment device (41, 41'), which is activated by a drive device (40) and is configured to effect relative adjustment between the vehicle-mounted guide element (32, 34) and the seat-mounted guide element (22, 24), wherein the longitudinal-adjustment device (41, 41') has a rack (36, 38) and a gearwheel (43, 45), which is in meshing engagement with the rack,
**characterized**
**in that** the teeth (43', 45') of the gearwheel (43, 45) and/or the teeth (37', 39') of at least one portion of the rack (36, 38) consist of materials with different levels of shear strength, such that a weak-point region is formed between the gearwheel (43, 45) and the rack (36, 38), in which desired material failure occurs in the event of overloading.

2. Vehicle seat console according to Claim 1,
**characterized**
**in that** the rack (36, 38) is vehicle-mounted, and in that the gearwheel (43, 45) is mounted in a rotatable manner on the seat-mounted guide element (22, 24) or on the vehicle seat (2).

3. Vehicle seat console according to Claim 1 or 2,
**characterized**
**in that** the materials with different levels of shear strength have a metal, on the one hand, and a plastic material or a relatively soft material, for example a relatively soft metal, such as aluminium or copper, on the other hand.

4. Vehicle seat console according to Claim 3,
**characterized**
**in that** the gearwheel (43, 45) has metal teeth (43', 45'), and in that at least one region of the rack (36, 38) has teeth (37', 39') made of a plastic material or of a relatively soft material, for example a relatively soft metal, such as, for example, aluminium or copper, of which the level of shear strength is lower than that of the metal teeth (43', 45') of the gearwheel (43, 45).

5. Vehicle seat console according to one of the preceding claims,
**characterized**
**in that** the toothing formation between the gearwheel (43, 45) and the rack (36, 38) is a double helical toothing formation.

6. Vehicle seat console according to Claim 5,
**characterized**
**in that** the double helical toothing formation of the gearwheel (43, 45) is an open double helical toothing formation.

7. Vehicle seat console according to one of the preceding claims,
**characterized**
**in that** the double helical toothing formation of the rack (36, 38) is a closed double helical toothing formation.

8. Vehicle seat having a vehicle seat console (1) according to one of the preceding claims.

9. Motor vehicle having at least one vehicle seat (2) according to Claim 8.

## Revendications

1. Base de siège de véhicule, comprenant au moins un élément de guidage côté véhicule (32, 34) et au moins un élément de guidage côté siège (22, 24) disposé en parallèle à l'élément de guidage côté véhicule (32, 34), ainsi qu'au moins un dispositif de réglage longitudinal (41, 41'), sollicité par un dispositif d'entraînement (40), qui est configuré pour provoquer un réglage relatif entre l'élément de guidage côté véhicule (32, 34) et l'élément de guidage côté siège (22, 24), le dispositif de réglage longitudinal (41, 41') présentant une crémaillère (36, 38) ainsi qu'une roue dentée (43, 45) en engrènement avec celle-ci,
**caractérisée en ce que** les dents (43', 45') de la roue dentée (43, 45) et/ou les dents (37', 39') d'au moins une partie de la crémaillère (36, 38) sont composées de matériaux ayant des résistances au cisaillement différentes de sorte qu'entre la roue dentée (43, 45) et la crémaillère (36, 38) une zone à point faible est réalisée dans laquelle une défaillance de matériau voulue survient en cas de surcharge.

2. Base de siège de véhicule selon la revendication 1, **caractérisée en ce que** la crémaillère (36, 38) est solidaire du véhicule, et **en ce que** la roue dentée (43, 45) est montée pivotante sur l'élément de guidage côté siège (22, 24) ou sur le siège de véhicule (2).

3. Base de siège de véhicule selon la revendication 1 ou 2, **caractérisée en ce que** les matériaux ayant des résistances au cisaillement différentes présentent d'une part un métal et d'autre part une matière synthétique ou un matériau plus mou, par exemple un métal plus mou, tel que l'aluminium ou le cuivre.

4. Base de siège de véhicule selon la revendication 3, **caractérisée en ce que** la roue dentée (43, 45) présente des dents métalliques (43', 45'), et **en ce qu'**au moins une zone de la crémaillère (36, 38) présente des dents (37', 39') composées d'une matière synthétique ou d'un matériau plus mou, par exemple d'un métal plus mou, comme par exemple l'aluminium ou le cuivre, dont la résistance au cisaillement est inférieure à celle des dents métalliques (43', 45') de la roue dentée (43, 45).

5. Base de siège de véhicule selon l'une quelconque des revendications précédentes, **caractérisée en ce que** la denture entre la roue dentée (43, 45) et la crémaillère (36, 38) est une denture en chevron.

6. Base de siège de véhicule selon la revendication 5, **caractérisée en ce que** la denture en chevron de la roue dentée (43, 45) est une denture en chevron ouverte.

7. Base de siège de véhicule selon l'une quelconque des revendications précédentes, **caractérisée en ce que** la denture en chevron de la crémaillère (36, 38) est une denture en chevron fermée.

8. Siège de véhicule comprenant une base de siège de véhicule (1) selon l'une quelconque des revendications précédentes.

9. Véhicule automobile comprenant au moins un siège de véhicule (2) selon la revendication 8.
